# EUROPEAN PATENT SPECIFICATION

(11) **EP 0 549 349 B1**
(45) Date of publication and mention of the grant of the patent: **07.10.1998**
(21) Application number: 92311768.3
(22) Date of filing: 23.12.1992
(51) Int. Cl.: A01N 25/34, A01N 25/04, B65D 65/46

(54) **Containerization systems**
Behältersysteme
Systèmes de conteneurisation

(30) Priority: 27.12.1991 US 815277
(43) Date of publication of application: 30.06.1993
(73) Proprietor: RHONE-POULENC AGROCHIMIE, 69009 Lyon (FR)
(72) Inventor: Long, David, Chapel Hill, North Carolina 27514 (US); Miles, David, Chapel Hill, North Carolina 27514 (US)
(74) Representative: Bentham, Stephen

(56) References cited:
- EP-A- 0 347 222
- EP-A- 0 420 497
- EP-A- 0 449 773
- WO-A-92/01376
- DE-A- 4 113 786
- GB-A- 922 317
- US-A- 3 773 926
- US-A- 4 698 362

## Description

The invention relates to new containerisation systems comprising hazardous products and which are nevertheless safe for handling and the environment.

At present, most hazardous liquids are stored in metal drums or, where smaller quantities are required, plastic containers.

Hazardous compounds, especially agrochemical compounds, are formulated in various compositions. Liquid compositions are most convenient for farmers because of the relative ease with which they can be handled. There are nevertheless, difficulties in handling such liquid compositions. There is a danger of spillage or leakage if there are holes in the containers previously used or if they are dropped. Although secure containers resistant to shock can be used, in the event of an accident, for example during transportation, the risk remains of spillage or leakage with rapid loss of liquid, for example leaking onto the ground.

It has been difficult to provide a formulation and a containing system which safeguards those handling it, including farmers and transporters, and the environment.

An object of the instant invention is to provide a new formulation system to contain agrochemicals which is safe for everybody, and the environment.

Another object of the instant invention is to provide a new formulation system for agrochemicals which is easy to put in a containing system and which is easy to manipulate for the farmer.

Another object of the instant invention is to provide a new formulation system for agrochemicals which is readily, rapidly and easily soluble and/or dispersable in water.

Another object of the instant invention is to provide a new formulation system for agrochemicals which is as much condensed as possible, using the least amount of space.

Another object of the instant invention is to provide a new formulation system to contain hazardous compounds, e.g., agrochemicals, which diminishes the risk of pollution.

It is also known that agrochemicals may be contained in soluble bags or sachets made from films. Many kinds of active ingredients or pesticides may be used with water soluble bags. Due to the need for dispersibility in the farmer's tank, the active ingredient should remain in a finely divided state. Powders may thus be used in water soluble bags; however, such a system cannot avoid problems due to dusts. Powders are also a problem for the farmers when bags have holes and also for the manufacturers in handling the powders to fill the bags.

It is also known that liquid agrochemicals may be contained in soluble bags or sachets made from films (see for example EP-A-347,222, GB-A-2,244,258 and EP-A-449 773). Wash-off resistance is desirable for sprayed agrochemicals, in order to get a good persistency of their effect.

An object of the instant invention is to try to solve this wash-off resistance problem by means of oil-based formulations. However, many active ingredients cannot be formulated easily due to their low solubility in organic solvents or oils.

When the active hazardous compound has a low solubility in common solvents, it is difficult to obtain a good formulation, especially a good emulsion or emulsified concentrate.

Among the many problems which are created when the hazardous compound has a low solubility, there is the difficulty of obtaining a cheap and easily usable formulation, because the formulation should be diluted (assuming that the solubility is not zero) and thus costs are increased due to the fact that large volumes of solvent(s) and additives (surfactants or others) are involved and handled.

This problem of large amounts of solvent(s) due to a substantial dilution may be, at least partially, overcome by having the formulation of the suspension type, that is to say wherein the active ingredient is, at least partly, in an insoluble form and in a suspended state. Unfortunately, when it is attempted to put such formulation(s) in a water soluble bag to decrease the worker exposure to hazardous compounds, a totally new kind of problem arises due to the fact that such packaging systems containing suspensions are more sensitive to temperature fluctuations. This increased sensitivity to temperature fluctuation is due to different factors. One factor is simply that water soluble bags are generally smaller than normal packaging such as drums or the like, and packagings of smaller size are more sensitive to temperature fluctuation (the same amount of calories make the temperature increase or decrease more than when there is a larger amount of product).

Another problem is due to the fact that water soluble bags have preferably an air space therein (especially to be shock absorbing or for other purposes). However, this bag with an air space absorbs more energy from the sun than conventional packaging, mostly because the outer container of the water soluble bag, if cheap, is generally more translucent. This increased absorption of energy may be a deterrent from using suspensions, because it increases the so-called Ostwald ripening, that is to say the undesired progressive increase in size of the solid suspended particles when storage temperatures vary (and this undesired increase in suspended particle size may cause undesired settling of the suspension).

Pesticidal compositions comprising an active ingredient suspended in an organic medium have been disclosed in for example US-A- 4,698,369 and EP-A-420,497.

Another object of the instant invention is to have good packaging containing an active ingredient or hazardous compound in a suspended form.

Another object of the instant invention is to reduce settling of formulations, especially of suspensions, even when they are in a water soluble bags.

Another object of the instant invention is to reduce the sensitivity of water soluble bags containing a suspension to temperature fluctuations.

Another object of the present invention is to provide a shock absorbing formulation system for containing agrochemicals, e.g., pesticides, plant protection agents, or plant growth regulators.

A further object is to provide a new formulation system for agrochemicals which quickly dissolves or disperses when put into water and which is well adapted to active ingredients which have a low solubility in common solvents.

A further object of the present invention is to provide a formulation system wherein less solvent is needed in the formulation of the pesticides, which is cost saving both in shipping and manufacturing.

A further object is to provide a new formulation system for agrochemicals which reduces the risk of clogging and spraying nozzles or the filters of spray tanks.

Other objects of the invention will better appear from the following description. The objects of the invention can be achieved in full or in part by means of the invention.

The present invention provides containerisation systems which comprises a water dispersible organic composition in a water soluble or water dispersible bag, wherein the said composition has a spontaneity less than 75 and a specific gravity greater than 0.8 and the composition is in the form of a suspension of particles having a particle size less than 50 microns, and which composition comprises a hazardous compound and an organic solvent in which the hazardous compound has a solubility less than 2% w/w at 20°C, preferably less than 1%, and still more preferably less than 0.75%, and in which the material of the bag is insoluble, and wherein any unused capacity in the bag does not contain air or an inert gas.

The word "suspension", includes compositions wherein the hazardous compound is only in suspended form, as well as compositions wherein the hazardous compound is partly in a suspended form and partly in a soluble form. The solvent may be in the form of a single phase liquid or an emulsion. Suspo-emulsions, where the solvent is an emulsion are included in the general meaning of "suspension".

The compositions used in the invention may include in addition to the hazardous compound
an organic solvent or a mixture of solvents) wherein the active ingredient is less than 2 percent soluble,
a dispersant,
a surfactant or emulsifier,
a thickener or thickening agent,
other additives, such as stabilizer(s), antifoaming agent(s), buffer(s), and antifreezing agent(s).

Among the compositions used in the invention, as hereabove defined, some are preferred, especially those comprising one or more of the following constituents and/or having one or more of the following characteristics:
they are in the form of liquids or gels,
they comprise an organic solvent having a flash point higher than 60°C, preferably higher than 70°C,
they comprise an organic solvent having more than 10, preferably more than 14 carbon atoms,
the size of the suspended particles is less than 20 microns,
they comprise 5 to 95%, more preferably 15 to 80%, of the active ingredient (i.e., the hazardous compound),
they comprise 1 to 50%, more preferably 2 to 15%, of the surfactant,
they comprise 0.1 to 50%, more preferably 1 to 10%, of the thickener(s),
they comprise up to 80% of the solvent, more preferably 3 to 75%,
they comprise 0 to 20% of other additives (as herein before defined), preferably 0.1 to 10%,
they comprise a water soluble or water dispersible surfactant, which may be non ionic or anionic or cationic or may have more than one of these characteristics,
they comprise a water soluble or water dispersible surfactant, this surfactant(s) satisfying the following test: the solvent (50 g) and the surface-active adjuvant (5 g) are added to an amount of water, at 50°C, which is sufficient to bring the volume of the mixture to 100 ml; the mixture is agitated so as to give a homogeneous suspension or suspo-emulsion and this is left to stand for 30 minutes at 50°C in a graduated cylinder; the amount of oily layer which may have separated out or the amount of solid which has settled out (and thus formed a distinct liquid or solid phase) must then be less than 20 ml,
they comprise less than 3% by weight of water, preferably less than 1%.

When the compositions contain a dispersant, they preferably comprise 1 to 25%, more preferably 2 to 8%, of the dispersant.

The solvents which may be used in the invention are liquid, preferably non-polar solvents. Among the many solvents which can be used, those are preferred which have more than 8 carbon atoms per molecule, preferably 10 or more carbon atoms. The solvents may be chosen in the group comprising (this list is non limitative or restrictive) linear or branched paraffinic hydrocarbons or halogenated hydrocarbons; aromatic or alkyl aromatic hydrocarbons or halogenated hydrocarbons; unsaturated hydrocarbons or halogenated unsaturated hydrocarbons; cyclic or halogenated hydrocarbons; long chain alcohols and fatty alcohols. Paraffinic hydrocarbons are preferred.

However, the list of solvents which is hereabove given should be understood in a such way that the requirement of the general definition of the invention is met, that is to say that, for a particular active ingredient/hazardous compound, the solubility of the compound is less than 2% in the chosen solvent. If not, another solvent is to be chosen.

According to a particular feature of the invention, the components of the compositions are chosen in such a way that the compositions have a viscosity of 50 to 30,000 centipoise, more preferably of 100 to 12,000 centipoise (these viscosities are Brookfield viscosities measured with a viscosimeter in form of a flat plate rotating at 20 revolutions per minute). Low viscosities are generally helpful to get easy dispersibility of the formulations in water by the user (e.g., the farmer). However, in order to reduce or avoid possible leakages when punctures happen, higher viscosities are preferred. As a practical matter, viscosities in the range of 800 to 10,000 centipoise are preferred.

According to one preferred feature, the compositions used in the invention preferably have a specific gravity greater than 0.9.

According to a particular preferred feature of the invention, the components of the compositions are chosen in such a way that the compositions have a spontaneity (as hereafter defined) less than 25.

The spontaneity is assessed according to the following method: A mixture of 1 ml formulation with 99 ml water are put into a 150 ml glass tube which is stoppered and inverted through 180° (upside down). The number of times required to completely disperse the formulation is called the spontaneity.

By the word surfactant, it is meant an organic material which is able to substantially reduce the surface tension of water which is 73 dynes/cm at 20°C.

The surfactant which may be used in the invention may be selected from among those of the following list (which is non-limitative): alkanolamides, polycondensates of ethylene oxide with fatty alcohols, fatty esters, or fatty amines, or substituted phenols (particularly alkylphenols or arylphenols); block copolymers with ethoxy and propoxy groups; ester of fatty acids with polyols such as glycerol or glycol; polysaccharides; organopolys'iloxanes; sorbitan derivatives; ethers or esters of sucrose or glucose; salts of lignosulfonic acids, salts of phenyl sulfonic or naphthalene sulfonic acids, diphenyl sulfonates; alkylaryl sulfonates; sulfonated fatty alcohols or amines or asides; polycondensates of ethylene oxide with fatty acids and their sulfate or sulfonate derivatives; salts of sulfosuccinic or sulfosuccinamic acid esters; taurine derivatives (particularly alkyltaurates); betaine derivatives; phosphoric esters of alcohols or of polycondensates of ethylene oxide with phenols; and sulfate, sulfonate and phosphate functional derivatives of the above compounds.

By the word "thickener" or "thickening agent", it is meant a material corresponding to the active ingredient in such a way that, when mixed, at 50/50 w/w and 25°C, with (and optionally grinded with) an organic solvent wherein the active ingredient is insoluble, a thickened suspension can be obtained. The thickeners in the invention can be either liquid or solid at 23°C and are soluble at less than 10% in the liquid mixture of active ingredient and surfactant above 50°C. Furthermore, these thickeners have, when they are solid, a particle size lower than 100 microns, preferably less than 20 microns.

Thickeners which may be used in the invention are tetramethyl decenediol, ethoxylated dialkylphenol, alkylated clay, propylene carbonate, hydrogenated caster oil, ethoxylated vegetable oil, diatomaceous earth, mixture of dioctyl sodium sulfosuccinate and sodium benzoate, mixtures of hexanediol and hexenediol, polyacrylic acid, and benzoic acid. Low molecular weight polymers can also be used as thickeners.

By the expression "hazardous product" as used herein is meant a product which may cause damage to the environment or be injurious to a person handling it.

According to one main and preferred feature of the invention, the hazardous product is an active ingredient which is an agrochemical, and more precisely a pesticide or a plant protection agent (including plant growth regulators or plant nutrients).

The invention is not limited to some specific agrochemicals; a list of many agrochemicals or plant protection agents which can be used in the invention includes:
herbicides such as atrazine, dicamba, bentazone, bromoxynil, bromoxynil ester, cyanazine, fluometuron, metribuzin, sulfometuron-methyl, pursuit, imazaquin, norflurazon, diflufenican, isoproturon, simazine, linuron, acifluorfen or acifluorfen sodium, trichlopyr, asulam, aclonifen, sulfonylureas and trialkoxydim;
insecticides or miticides such as acephate, azinophosmethyl, thiodicarb, carbaryl, carbofuran, methamidofos, fenbutalin oxide, trichlorfon, abamectin, aldicarb, malathion, and pyrethroids such as alpha cypermethrin, bacillis thuringensis, delatmethrin;
fungicides such as chlorothalonil, captan, fosethyl-Al, maneb, mancozeb, zineb, tridimefon, metalaxyl, iprodione, fenarimol, sulfur, quintozene, copper salts, vinclozolin, thiophanate-methyl, thiram, trycyclazole, dicloran, benomyl;
plant growth regulators such as thidiazuron, dimethipin, ethephon and mepiquat,
and other biological biocides and mixtures thereof.

A dispersant according to the present invention is a compound or a combination of compounds which 1) allow the material to be ground sufficiently fine to stop settling without causing thickening, and 2) allows adequate dispersion of the formulation in water such that there is no agglomeration of the solids after emulsification of the carrier liquids.

The dispersant which may be used in the invention may be selected among those of the following list (which is non limitative): salts of lignosulfonic acids such as calcium lignosulfonate, salts of phenyl sulfonic or naphthalene sulfonic acids, condensed naphthalene sulfonic acid; polycondensates of ethylene oxide with fatty alcohols or fatty acids or fatty esters or fatty amines, or substituted phenols (particularly alkylphenols or arylphenols); salts of sulfosuccinic acid esters, such as sodium sulfosuccinate; taurine derivatives (particularly alkyltaurates); phosphoric esters of alcohols or of polycondensates of ethylene oxide with phenols; esters of polyols and of fatty acids or sulfuric acid or sulfonic acids or phosphoric acids, glyceryl esters, especially esters with fatty acids such as glyceryl stearate; phospholipids; lecithin; ethylene glycols; and the like.

The compositions used in the invention can be prepared or manufactured by any known method. A convenient way is to mix together the different constituents of the mixture/composition and to stir them, optionally with grinding or milling and/or heating. The constituents of the composition may be added and mixed randomly or added in several various manners which more conveniently achieve the desired gel properties. As is known to one of ordinary skill in the art, such addition may depend upon the physical and chemical nature of the individual constituents, their combination(s), and the desired final gel. In this regard, sometimes it is easier to operate with a slow addition of the constituents of the composition.

The water soluble or dispersible bags used in the containerization systems of the present invention are preferably cold water soluble. Cold water soluble means soluble in water under 35°C.

The chemical nature of the enveloping film constituting the bags which may contain the con-positions/gels of the invention can vary quite widely. Suitable materials are water soluble (or water dispersable) materials which are insoluble in the organic solvents used to dissolve or disperse the agrochemical active ingredient. Specific suitable materials include polyethylene oxide, such as polyethylene glycol; starch and modified starch; alkyl and hydroxyalkylcelluloses such as hydroxymethylcellulose, hydroxyethylcellulose, hydroxypropylcellulose, and carboxymethylcellulose; polyvinyl ethers such as polymethylvinyl ether; poly(2,4-dimethyl-6-triazolylethylene); poly(vinylsulfonic acid); polyanhydrides; low molecular weight urea-formaldehyde resins; low molecular weight melamine-formaldehyde resins; poly(2-hydroxyethyl methacrylate); polyacrylic acid and its homologs; but preferably the enveloping film comprises or is made from polyvinylalcohol (PVA). It might be that some agrochemicals may react with some polymers constituting the wall of the bags; in such a situation, the material constituting the wall of the bags is changed into a material which is inert to the agrochemicals.

Preferred materials for constituting the bags for the invention are polyethylene oxide, methylcellulose, or polyvinylalcohol. When polyvinylalcohol is used, it is advantageously a 40-100%, preferably 80-99%, alcoholysed or hydrolysed polyvinyl acetate film.

According to another feature, the bag of the invention is filled to at least 60% of capacity with the agrochemical composition-containing substance, more preferably to at least 70% of capacity, still more preferably 80 to 99% of capacity and most preferably 85 to 95% of capacity. The bag is preferably not filled to complete capacity because the unused capacity gives the bag shock resistance, i.e., resistance to breakage when dropped, transported or stored. This unused capacity may not contain air or an inert gas. An absence of air or inert gas in the unused capacity further improves shock resistance. However, in deciding how much unused capacity, to provide, the advantages of shock resistance must be balanced against the need, if any, for shock resistance and the cost of providing shock resistance. For example, if the bag is stored and/or transported in a shock absorbing container, then it may not be as helpful to provide this unused capacity.

The water soluble films which are used to make the water soluble bags are known. In order to make a bag, the film needs to be shaped (possibly partially sealed) and then filled with the compositions comprising the hazardous compound. When filled, the bags have to be finally sealed, generally heat sealed, to be closed.

The following examples are given for illustrative purposes and should not be understood as restricting the invention.

In these examples, the Brookfield viscosity was measured, as previously indicated, with a Brookfield viscosimeter which had a flat plate rotating at 20 revolutions per minute.

The emulsion stability is evaluated according to the following method: 1 ml of the formulation is mixed with 99 ml water in a 150 ml tube; the tube is inverted 10 times at the rate of 1 complete inversion per second. Rating of the emulsion stability is made by reading the relative amount of the phases after 24 hours. The emulsion stability is rated as follows: "excellent" if the amount of emulsion (phase looking like milk) represents 98 to 100% (v/v) of the total, the balance being cream or thin; "good" if the amount of emulsion represents 90 to 98% (v/v) of the total, the balance being mainly cream with no more than 5 ml being thin; "fair" if the amount of emulsion represents 70 to 90% (v/v) of the total, the balance being cream or thin; and "poor" if the total of emulsion represents 70% or less (v/v) of the total.

The spontaneity is assessed according to the following method: a mixture of 1 ml of the formulation with 99 ml water are put into a 150 ml glass tube (diameter 22 mm) which is stoppered and inverted by 180 degrees (upside down). The number of inversions required to completely disperse the formulation is called the spontaneity.

The following general procedures were used in the following examples.

The water soluble films which were used to make the water soluble bags are known. In order to make a bag, the film were shaped and partially sealed and then filled with the compositions of the invention. Generally these compositions were able to flow, even if at a slow rate due to their high viscosity. When filled, the bags were finally heat sealed in order to be closed.

The suspension concentrates were prepared by adding the carrier and the additives while shearing and/or milling (attrition milling), until the proper particle size was achieved. The surfactant and active ingredient(s) were then added and mixed.

### EXAMPLE 1

The components are listed below and the percent given:

| Component | Name | Percent |
|---|---|---|
| Organic carrier | Paraffin Oil | 45.3 |
| Organophilic clay | Thickener | 2.0 |
| Activator | Methanol | 0.7 |
| Dispersant | Lecithin | 7.0 |
| Dispersant | Alkylnapthalene sulfonate | 2.5 |
| Active ingredient | Thiodicarb | 37.5 |
| Surfactant | Dioctylsulfosuccinate | 5.0 |

The components were mixed together. The viscosity of this mixture was approximately 1000 centipoise. The dispersion in water was obtained after 3 inversions. This formulation was then packaged in water soluble polyvinyl alcohol films which can be dispersed in water.

The bag was then dropped 10 times from 1.2 m upon the ground. No breaking or leakage was observed.

The bag was put in a tank containing water under gentle agitation, i.e., agitation such as that obtained with pump recycling. It was dispersed within a 3 minute interval. There was no clogging in the filter which was a 100 mesh screen.

Another bag made in the same way as the previous one was tested for pinhole protection. A needle (diameter: 0.6 mm) was passed through the bag. A small droplet formed at the locus where the needle passed, but this droplet was small enough not to drop from the bag and not to flow along the bag.

### EXAMPLE 2

A mixture was made based upon the following components (the percentage of compounds w/w is given):

| | |
|---|---|
| Petroleum hydrocarbon | 47.54 |
| Organophilic clay | 1.69 |
| Mixture of methanol/water, 95:5 v/v | 0.56 |
| Lecithin | 5.83 |
| Sodium alkyl naphtalene sulfonate | 2.14 |
| Sodium dioctyl sulfosuccinate | 4.75 |
| Ethoxylated propoxylated nonyl phenol | 4.75 |
| Tiodicarb technical (94.4%) | 32.74 |
| | 100.00 |

The organophilic clay was sheared with the methanol, water and hydrocarbon until thick. The lecithin was added and the material thinned down. The sodium alkyl naphthalene sulfonate was then added, then the surfactants, EDTA, ammonium phosphate, and active ingredient. This formulation was ground in a horizontal bead mill until the maximum particle size is under 30 micron. The Brookfield viscosity of the formulation was 300 centipoise. Ten grams of this material were sealed into a water soluble bag approximately 4 cm x 2.5 cm of polyvinylalcohol film of 40 micron thickness. This material had a degree of hydrolysis of 93%. After 50 days storage the bag was drop tested from a height of 1.3 m and showed no sign of bag rupture. After 50 days the bags were then put into water and the material evaluated for dispersibility. The bag was placed in a container simulating an agricultural mix tank and with very minor agitation in the beginning. After 3 minutes the bag ruptured and after 5 minutes 10 seconds with agitation, as might be seen an agricultural mix tank, the solution appeared homogeneous.

### EXAMPLE 3

A mixture was made in the same way as in Example 2 using the following components:

| | |
|---|---|
| Petroleum hydrocarbon | 45.9560 |
| Organophilic clay | 1.3320 |
| Mixture methanol/water, 95/5 v/v | 0.4440 |
| Lecithin | 5.7720 |
| Sodium alkyl naphthalene sulfonate | 2.2200 |
| Sodium dioctyl sulfosuccinate | 4.7641 |
| Ethoxylated propoxylated nonyl phenol | 4.7181 |
| Ethylene oxide-propylene oxide copolymer | 0.9528 |
| EDTA | 0.9528 |
| Ammonium phosphate dibasic | 0.4764 |
| 2,4-D acid technical (98%) | 32.4120 |
| | 100 |

This formulation was ground until the maximum particle size was under 20 micron. The Brookfield viscosity of the formulation was 1200 centipoise. Ten grams of this material was sealed into the same bag as in Example 2. After 50 days storage the bag was drop tested from a height of 1.3 m and showed no sign of bag rupture. After 50 days the bag was then put into water and the material evaluated for dispersibility. The bag was placed in a container simulating an agricultural mix tank and with very minor agitation in the beginning. After 2.5 minutes the bag ruptured and after 5 minutes with agitation, as might be seen in an agricultural mix tank, the solution appeared homogeneous.

### EXAMPLE 4

A mixture was made in the same way as in Example 2 using the following components:

| | |
|---|---|
| Petroleum hydrocarbon | 53.3850 |
| Organophilic clay | 1.0951 |
| Mixture methanol/water, 95/5 v/v | 0.3650 |
| Lecithin | 4.7456 |
| Sodium alkyl naphthalene sulfonate | 1.8252 |
| Sodium dioctyl sulfosuccinate | 4.7602 |
| Ethoxylated propoxylated nonyl phenol | 4.7952 |
| Ethylene oxide-propylene oxide copolymer | 0.9500 |
| EDTA | 0.9520 |
| Ammonium phosphate dibasic | 0.4760 |
| Thiram tech | 26.6490 |
| | 100 |

This formulation was ground until the maximum particle size was under 28 micron. The Brookfield viscosity of the formulation was 1500 centipoise. Ten grams of this material was sealed into the same bag as in Example 2. After 50 days storage the bag was drop tested from a height of 1.3 m and showed no sign of bag rupture. After 50 days the bag was then put into water and the material evaluated for dispersibility. The bag was placed in a container simulating an agricultural mix tank and with very minor agitation in the beginning. After 2.5 minutes the bag ruptured and after 50 minutes with agitation, as might be seen in an agricultural mix tank, the solution appeared homogeneous.

### EXAMPLE 5

A mixture was made in the same way as in Example 2 using the following components:

| | |
|---|---|
| Petroleum hydrocarbon | 55.8880 |
| Organophilic clay | 1.0177 |
| Mixture methanol/water, 95/5 v/v | 0.3392 |
| Lecithin | 4.4102 |
| Sodium alkyl naphthalene sulfonate | 1.6962 |
| Sodium dioctyl sulfosuccinate | 4.7631 |
| Ethoxylated propoxylated nonyl phenol | 4.7388 |
| Ethylene oxide-propylene oxide copolymer | 0.9526 |
| EDTA | 0.9526 |
| Ammonium phosphate dibasic | 0.4763 |
| Atrazine technical (97-98%) | 24.7650 |
| | 100 |

This formulation was ground until the maximum particle size was under 38 micron. The Brookfield viscosity of the formulation was 2500 centipoise. Ten grams of this material was sealed into the same bag as in Example 2. After 50 days storage the bag was drop tested from a height of 1.3 m and showed no sign of bag rupture. After 50 days the bag was then put into water and the material evaluated for dispersibility. The bag was placed in a container simulating an agricultural mix tank and with very minor agitation in the beginning. After 2 minutes 40 seconds the bag ruptured and after 5.5 minutes with agitation, as might be seen in an agricultural mix tank, the solution appeared homogeneous.

### EXAMPLE 6

A mixture was made in the same way as in Example 2 using the following components:

| | |
|---|---|
| Petroleum hydrocarbon | 50.8930 |
| Organophilic clay | 1.1748 |
| Mixture methanol/water, 95/5 v/v | 0.3916 |
| Lecithin | 5.0909 |
| Sodium alkyl naphthalene sulfonate | 1.9580 |
| Sodium dioctyl sulfosuccinate | 4.7619 |
| Ethoxylated propoxylated nonyl phenol | 4.7619 |
| Ethylen oxide-propylene oxide copolymer | 0.9524 |
| EDTA | 0.9524 |
| Ammonium phosphate dibasic | 0.4762 |
| Daconil technical (96%) | 28.5870 |
| | 100 |

This formulation was ground until the maximum particle size was under 30 micron. The Brookfield viscosity of the formulation was 1000 centipoise. Ten grams of this material was sealed into the same bag as in Example 2. After 50 days storage the bag was drop tested from a height of 1.3 m and showed no sign of bag rupture. After 50 days the bag was then put into water and the material evaluated for dispersibility. The bag was placed in a container simulating an agricultural mix tank and with very minor agitation in the beginning. After 2 minutes 35 seconds the bag ruptured and after 6 minutes with agitation, as might be seen in an agricultural mix tank, the solution appeared homogeneous.

### EXAMPLE 7

A mixture was made in the same way as in Example 2 using the following components:

| | |
|---|---|
| Petroleum hydrocarbon | 53.4210 |
| Organophilic clay | 1.0959 |
| Mixture methanol/water, 95/5 v/v | 0.3653 |
| Lecithin | 4.7489 |
| Sodium alkyl naphthalene sulfonate | 1.8265 |
| Sodium dioctyl sulfosuccinate | 4.7635 |
| Ethoxylated propoxylated nonyl phenol | 4.7304 |
| Ethylene oxide-propylene oxide copolymer | 0.9527 |
| EDTA | 0.9527 |
| Ammonium phosphate dibasic | 0.4763 |
| Bromoxynil acid technical (99.65%) | 26.6670 |
| | 100 |

This formulation was ground until the maximum particle size was under 46 micron. The Brookfield viscosity of the formulation was 500 centipoise. Ten grams of this material was sealed into the same bag as in Example 2. After 50 days storage the bag was drop tested from a height of 1.3 m and showed no sign of bag rupture. After 50 days the bag was then put into water and the material evaluated for dispersibility. The bag was placed in a container simulating an agricultural mix tank and with very minor agitation in the beginning. After 2 minutes 50 seconds the bag ruptured and after 4.5 minutes with agitation, as might be seen in an agricultural mix tank, the solution appeared homogeneous.

### EXAMPLE 8

A mixture was made in the same way as in Example 2 using the following components:

| | |
|---|---|
| Petroleum hydrocarbon | 52.8950 |
| Organophilic clay | 1.1104 |
| Mixture methanol/water, 95/5 v/v | 0.3701 |
| Lecithin | 4.8116 |
| Sodium alkyl naphthalene sulfonate | 1.8506 |
| Sodium dioctyl sulfosuccinate | 4.7598 |
| Ethoxylated propoxylated nonyl phenol | 4.8039 |
| Ethylen oxide-propylene oxide copolymer | 0.9520 |
| EDTA | 0.9520 |
| Ammonium phosphate dibasic | 0.4760 |
| Sulfur usp | 27.0190 |
| | 100 |

This formulation was ground until the maximum particle size was under nearly 50 micron. The Brookfield viscosity of the formulation was 600 centipoise. Ten grams of this material was sealed into the same bag as in Example 2. After 50 days storage the bag was drop tested from a height of 1.3 m and showed no sign of bag rupture. After 50 days the bag was then put into water and the material evaluated for dispersibility. The bag was placed in a container simulating an agricultural mix tank and with very minor agitation in the beginning. After 3 minutes the bag ruptured and after 5.5 minutes with agitation, as might be seen in an agricultural mix tank, the solution appeared homogeneous.

### EXAMPLE 9

A mixture was made in the same way as in Example 2 using the following components:

| | |
|---|---|
| Petroleum hydrocarbon | 45.2290 |
| Organophilic clay | 1.3109 |
| Mixture methanol/water, 95/5 v/v | 0.4370 |
| Lecithin | 5.6807 |
| Sodium alkyl naphthalene sulfonate | 2.1849 |
| Sodium dioctyl sulfosuccinate | 4.6887 |
| Ethoxylated propoxylated nonyl phenol | 4.6829 |
| Ethylene oxide-propylene oxide copolymer | 0.9377 |
| Ganex v216 | 1.5421 |
| EDTA | 0.9377 |
| Ammonium phosphate dibasic | 0.4689 |
| Fosetyl-al technical (97%) | 31.8990 |
| | 100 |

This formulation was ground until the maximum particle size was under 35 micron. The Brookfield viscosity of the formulation was 2000 centipoise. Ten grams of this material was sealed into the same bag as in Example 2. After 50 days storage the bag was drop tested from a height of 1.3 m and showed no sign of bag rupture. After 50 days the bag was then put into water and the material evaluated for dispersibility. The bag was placed in a container simulating an agricultural mix tank and with very minor agitation in the beginning. After 3 minutes 10 seconds the bag ruptured and after 5 minutes 20 seconds with agitation, as might be seen in an agricultural mix tank, the solution appeared homogeneous.

### EXAMPLE 10

A mixture was made in the same way as in Example 2 using the following components:

| | |
|---|---|
| Petroleum hydrocarbon | 50.8440 |
| Organophilic clay | 1.1754 |
| Mixture methanol/water, 95/5 v/v | 0.3918 |
| Lecithin | 5.0934 |
| Sodium alkyl naphthalene sulfonate | 1.9590 |
| Sodium dioctyl sulfosuccinate | 4.7603 |
| Ethoxylated propolated nonyl phenol | 4.7946 |
| Ethylene oxide-propylene oxide copolymer | 0.9498 |
| EDTA | 0.9498 |
| Ammonium phosphate dibasic | 0.4805 |
| Glyphasate acid technical (89.2%) | 28.6010 |
| | 100 |

This formulation was ground until the maximum particle size was under 38 micron. The Brookfield viscosity of the formulation was 5000 centipoise. Ten grams of this material was sealed into the same bag as in example 2. After 50 days storage the bag was drop tested from a height of 1.3 m and showed no sign of bag rupture. After 50 days the bag was then put into water and the material evaluated for dispersibility. The bag was placed in a container simulating an agricultural mix tank and with very minor agitation in the beginning. After 2 minutes 35 seconds the bag ruptured and after 6.5 minutes with agitation, as might be seen in an agricultural mix tank, the solution appeared homogeneous.

### EXAMPLE 11

A mixture was made in the same way as in Example 2 using the following components:

| | |
|---|---|
| Methyl fatty acid esters | 55.29 |
| Organophilic clay | 2.13 |
| Mixture methanol/water, 95/5 v/v | 0.68 |
| Lecithin | 5.53 |
| Sodium alkyl naphthalene sulfonate | 2.04 |
| Sodium dioctyl sulfosuccinate | 4.75 |
| Ethoxylated propoxylated nonyl phenol | 4.75 |
| Thiodicarb technical (94.4%) | 32.74 |
| Alkyl polyvinylpyrollidone | 5.00 |
| | 100.00 |

This formulation was ground until the maximum particle size was under 30 micron. The Brookfield viscosity of the formulation was 1500 centipoise. Ten grams of this material was sealed into the same bag as in Example 2. After 40 days storage the bag was drop tested from a height of 1.3 m and showed no sign of bag rupture. After 40 days the bag was then put into water and the material evaluated for dispersibility. The bag was placed in a container simulating an agricultural mix tank and with very minor agitation in the beginning. After 2 minutes 50 seconds the bag ruptured and after 5 minutes 20 seconds with agitation, as might be seen in an agricultural mix tank, the solution appeared homogeneous.

## Claims

1. A containerisation system which comprises a water-dispersible organic composition in a water-soluble or water-dispersible bag wherein the said composition has a spontaneity less than 75, a specific gravity greater than 0.8 and the composition is in the form of a suspension of particles having a particle size less than 50 microns, and which composition comprises a hazardous compound and an organic solvent in which the hazardous compound has a solubility less than 2% w/w at 20°C and in which the material of the bag is insoluble and wherein any unused capacity in the bag does not contain air or an inert gas.

2. A containerisation system according to claim 1 wherein the hazardous compound has a solubility in the solvent less than 1% w/w at 20°C.

3. A containerisation system according to claim 1 or 2 wherein the bag is cold water soluble and the hazardous compound is an agrochemical or a pesticide or a plant protection agent.

4. A containerisation system according to claim 3 wherein the hazardous compound has a solubility in the solvent less than 0.75% w/w at 20°C

5. A containerisation system according to any of claims 1 to 4 which comprises a composition which contains:
a dispersant, a surfactant or emulsifier, a thickener or thickening agent, and/or other additives.

6. A containerisation system according to claim 5 wherein the other additives comprise stabilizer(s), antifoaming agent(s), buffer(s) and/or freezing agent(s).

7. A containerization system according to any of claims 1 to 6 which comprises a composition wherein the organic solvent has a flash point higher than 60°C.

8. A containerization system according to claim 7 wherein the flash point is higher than 70°C.

9. A containerization system according to any claims 1 to 8 wherein the size of the suspended particles is less than 20 microns.

10. A containerization system according to any one of the preceding claims wherein the bag contains about 10 grams of composition in the form of suspension.

11. A containerization system according to any of claims 5 to 10 wherein the composition comprises
5 to 95% of a hazardous product or agrochemical,
1 to 50% of a surfactant
0.1 to 50% of a thickener(s)
up to 80% of the solvent
0 to 20% of other additives.

12. A containerization system according to claim 11 wherein the composition comprises:
15 to 80% of a hazardous product or agrochemical,
2 to 15% of a surfactant
1 to 10% of a thickener(s)
3 to 75% of the solvent
0.1 to 10% of other additives.

13. A containerization system according to any one of claims 1 to 12 which comprises a composition which contains 1 to 25% of a dispersant.

14. A containerization system according to claim 13 which comprises a composition which contains 2 to 8% of a dispersant.

15. A containerization system according to any one of the preceding claims which comprises a composition containing a water soluble or water dispersible surfactant satisfying the following test: the solvent (50 g) and the surface-active adjuvant (5 g) are added to an amount of water, at 50°C, which is sufficient to bring the volume of the mixture to 100 ml; the mixture is agitated so as to give a homogenous suspension or suspo-emulsion and this is left to stand for 30 minutes at 50°C in a graduated cylinder, the amount of oily layer which may be separated out or the amount of solid which has settled out (and thus formed a distinct liquid or solid phase) must then be less than 20 ml.

16. A containerization system according to any of claims 1 to 15 which comprises a composition containing less than 3% by weight of water.

17. A containerization system according to claim 16 which comprises a composition containing less than 1% by weight of water.

18. A containerization system according to any of claims 1 to 17 which comprises a composition having a viscosity of 50 to 30000 centipoises.

19. A containerization system according to claim 18 which comprises a composition having a viscosity between 100 and 12000 centipoises.

20. A containerization system according to claim 19 which comprises a composition having a viscosity between 800 and 10000 centipoises.

21. A containerization system according to any one of claims 1 to 20 which comprises a composition having a spontaneity less than 25.

22. A containerization system according to any of claims 1 to 21 wherein the water soluble bag comprises an enveloping film comprising a polymer chosen from polyethylene oxide, polyethylene glycol; starch and modified starch; alkyl and hydroxyalkylcellulose, hydroxymethylcellulose, hydroxyethylcellulose, hydroxypropylcellulose, carboxymethylcellulose; polyvinylethers, polymethylvinylether; poly(2,4-dimethyl-6-triazolylethylene); poly(vinylsulfonic acid); polyanhydrides; low molecular weight urea-formaldehyde resins; low molecular weight melamine-formaldehyde resins; poly(2-hydroxyethyl methacrylate); polyacrylic acid and its homologs; and polyvinyl alcohol.

23. A containerization system according to any of claims 1 to 22 wherein the water soluble bag comprises an enveloping film which comprises polyethylene oxide or methylcellulose or polyvinyl alcohol.

24. A containerization system according to claim 23 wherein the enveloping film constituting the bag is a 40-100% alcoholysed or hydrolysed polyvinyl acetate film.

25. A containerization system according to claim 24 wherein the enveloping film constituting the bag is an 80-99% alcoholysed or hydrolysed polyvinyl acetate film.

## Patentansprüche

1. Containerisierungssystem, welches eine in Wasser dispergierbare organische Zusammensetzung in einem wasserlöslichen oder in Wasser dispergierbaren Beutel umfaßt, wobei die Zusammensetzung eine Spontanität von weniger als 75, eine Dichte von mehr als 0,8 aufweist und die Zusammensetzung in Form einer Suspension von Teilchen mit einer Teilchengröße von weniger als 50 µm vorliegt und wobei die Zusammensetzung eine gefährliche Verbindung und ein organisches Lösemittel, in dem die gefährliche Verbindung eine Löslichkeit von weniger als 2 % (Gew./Gew.) bei 20°C aufweist und in dem das Material des Beutels unlöslich ist, umfaßt und wobei jegliches nicht genutzte Volumen in dem Beutel weder Luft noch ein Inertgas enthält.

2. Containerisierungssystem nach Anspruch 1, wobei die gefährliche Verbindung eine Löslichkeit in dem Lösemittel von weniger als 1% (Gew./Gew.) bei 20°C hat.

3. Containerisierungssystem nach Anspruch 1 oder 2, wobei der Beutel in kaltem Wasser löslich ist und die gefährliche Verbindung eine Agrochemikalie oder ein Pestizid oder ein Pflanzenschutzmittel ist.

4. Containerisierungssystem nach Anspruch 3, wobei die gefährliche Verbindung eine Löslichkeit in dem Lösemittel von weniger als 0,75% (Gew./Gew.) bei 20°C hat.

5. Containerisierungssystem nach einem der Ansprüche 1 bis 4, welches eine Zusammensetzung umfaßt, die enthält: ein Dispergiermittel, ein grenzflächenaktives Mittel oder Emulgiermittel, ein Verdickungsmittel oder Quellmittel und/oder andere Zusatzstoffe.

6. Containerisierungssystem nach Anspruch 5, wobei die anderen Zusatzstoffe einen oder mehrere Stabilisator(en), Antischaummittel, Puffer und/oder Gefriermittel umfassen.

7. Containerisierungssystem nach einem der Ansprüche 1 bis 6, welches eine Zusammensetzung umfaßt, in der das organische Lösemittel einen Flammpunkt von über 60°C hat.

8. Containerisierungssystem nach Anspruch 7, wobei der Flammpunkt über 70°C liegt.

9. Containerisierungssystem nach einem der Ansprüche 1 bis 8, wobei die Größe der suspendierten Teilchen geringer als 20 µm ist.

10. Containerisierungssystem nach einem der vorangegangenen Ansprüche, wobei der Beutel ungefähr 10 g Zusammensetzung in Form einer Suspension enthält.

11. Containerisierungssystem nach einem der Ansprüche 5 bis 10, wobei die Zusammensetzung umfaßt:
5 bis 95% eines gefährlichen Erzeugnisses oder einer Agrochemikalie,
1 bis 50% eines grenzflächenaktiven Mittels,
0,1 bis 50% eines oder mehrerer Verdickungsmittel,
bis zu 80% an Lösemittel,
0 bis 20% an anderen Zusatzstoffen.

12. Containerisierungssystem nach Anspruch 11, wobei die Zusammensetzung umfaßt:
15 bis 80% eines gefährlichen Erzeugnisses oder einer Agrochemikalie,
2 bis 15% eines grenzflächenaktiven Mittels,
1 bis 10% eines oder mehrerer Verdickungsmittel,
3 bis 75% an Lösemittel,
0,1 bis 10% an anderen Zusatzstoffen.

13. Containerisierungssystem nach einem der Ansprüche 1 bis 12, welches eine Zusammensetzung umfaßt, die 1 bis 25% eines Dispergiermittels enthält.

14. Containerisierungssystem nach Anspruch 13, welches eine Zusammensetzung umfaßt, die 2 bis 8% eines Dispergiermittels enthält.

15. Containerisierungssystem nach einem der vorangehenden Ansprüche, das eine Zusammensetzung umfaßt, die ein wasserlösliches oder in Wasser dispergierbares grenzflächenaktives Mittel enthält, das den folgenden Test besteht: das Lösemittel (50 g) und das grenzflächenaktive Adjuvans (5 g) werden einer Menge Wasser bei 50°C, die ausreicht, um das Volumen der Mischung auf 100 ml zu bringen, Zugesetzt; die Mischung wird bewegt, so daß eine homogene Suspension oder Suspo-Emulsion erhalten wird, und man läßt diese 30 min bei 50°C in einem graduierten Zylinder stehen; die Menge an öliger Phase, die sich möglicherweise abgetrennt hat, oder die Menge an Feststoff, der sich abgeschieden hat, (und folglich eine getrennte flüssige oder feste Phase gebildet hat) muß dann weniger als 20 ml betragen.

16. Containerisierungssystem nach einem der Ansprüche 1 bis 15, das eine Zusammensetzung umfaßt, die weniger als 3 Gew.-% Wasser enthält.

17. Containerisierungssystem nach Anspruch 16, das eine Zusammensetzung umfaßt, die weniger als 1 Gew.-% Wasser enthält.

18. Containerisierungssystem nach einem der Ansprüche 1 bis 17, das eine Zusammensetzung mit einer Viskosität von 50 bis 30000 Centipoise umfaßt.

19. Containerisierungssystem nach Anspruch 18, das eine Zusammensetzung mit einer Viskosität zwischen 100 und 12000 Centipoise umfaßt.

20. Containerisierungssystem nach Anspruch 19, das eine Zusammensetzung mit einer Viskosität zwischen 800 und 10000 Centipoise umfaßt.

21. Containerisierungssystem nach einem der Ansprüche 1 bis 20, das eine Zusammensetzung mit einer Spontanität von weniger als 25 umfaßt.

22. Containerisierungssystem nach einem der Ansprüche 1 bis 21, wobei der wasserlösliche Beutel eine umhüllende Folie, umfassend ein Polymer, ausgewählt aus Polyethylenoxid, Polyethylenglycol, Stärke und modifizierter Stärke, Alkyl- und Hydroxyalkylcellulose, Hydroxymethylcellulose, Hydroxyethylcellulose, Hydroxypropylcellulose, Carboxymethylcellulose, Polyvinylethern, Polymethylvinylether, Poly(2,4-dimethyl-6-triazolylethylen), Poly(vinylsulfonsäure), Polyanhydriden, Harnstoff-Formaldehyd-Harzen mit niedrigem Molekulargewicht, Melamin-Formaldehyd-Harzen mit niedrigem Molekulargewicht, Poly(2-hydroxyethyl-methacrylat), Polyacrylsäure und deren homologen Verbindungen sowie Polyvinylalkohol, umfaßt.

23. Containerisierungssystem nach einem der Ansprüche 1 bis 22, wobei der wasserlösliche Beutel eine umhüllende Folie, die Polyethylenoxid oder Methylcellulose oder Polyvinylalkohol umfaßt, umfaßt.

24. Containerisierungssystem nach Anspruch 23, wobei die den Beutel bildende umhüllende Folie eine zu 40-100% einer Alkoholyse unterzogene oder zu 40-100% hydrolysierte Polyvinylacetatfolie ist.

25. Containerisierungssystem nach Anspruch 24, wobei die den Beutel bildende umhüllende Folie eine zu 80-99% einer Alkoholyse unterzogene oder zu 80-99% hydrolysierte Polyvinylacetatfolie ist.

## Revendications

1. Système de conditionnement en récipient, qui comprend une composition organique dispersable dans l'eau dans un sac hydrosoluble ou dispersable dans l'eau, dans lequel ladite composition a une spontanéité inférieure à 75, une densité supérieure à 0,8 et est sous forme d'une suspension de particules ayant un diamètre de particules inférieur à 50 micromètres, composition qui comprend un composé dangereux et un solvant organique dans lequel le composé dangereux a une solubilité inférieure à 2 % en poids/poids à 20°C et dans lequel la matière du sac est insoluble, toute capacité non utilisée dans le sac ne contenant pas d'air ou de gaz inerte.

2. Système de conditionnement en récipient suivant la revendication 1, dans lequel le composé dangereux a une solubilité dans le solvant inférieur à 1 % en poids/poids à 20°C.

3. Système de conditionnement en récipient suivant la revendication 1 ou 2, dans lequel le sac est soluble dans l'eau froide et le composé dangereux est un agent agrochimique ou un pesticide ou bien un agent de protection des végétaux.

4. Système de conditionnement en récipient suivant la revendication 3, dans lequel le composé dangereux a une solubilité dans le solvant inférieure à 0,75 % en poids/poids à 20°C.

5. Système de conditionnement en récipient suivant l'une quelconque des revendications 1 à 4, qui comprend une composition qui contient : un dispersant, un surfactant ou un émulsionnant, un épaississant ou agent d'épaississement et/ou d'autres additifs.

6. Système de conditionnement en récipient suivant la revendication 5, dans lequel les autres additifs comprennent un ou plusieurs stabilisants, un ou plusieurs agents antimousses, un ou plusieurs tampons et/ou un ou plusieurs agents antigel.

7. Système de conditionnement en récipient suivant l'une quelconque des revendications 1 à 6, qui comprend une composition dans laquelle le solvant organique a un point d'éclair supérieur à 60°C.

8. Système de conditionnement en récipient suivant la revendication 7, dans lequel le point d'éclair est supérieur à 70°C.

9. Système de conditionnement en récipient suivant l'une quelconque des revendications 1 à 8, dans lequel le diamètre des particules en suspension est inférieur à 20 micromètres.

10. Système de conditionnement en récipient suivant l'une quelconque des revendications précédentes, dans lequel le sac contient environ 10 grammes de composition sous forme de suspension.

11. Système de conditionnement en récipient suivant l'une quelconque des revendications 5 à 10, dans lequel la composition comprend
5 à 95% d'un produit dangereux ou produit agrochimique,
1 à 50% d'un surfactant
0,1 à 50% d'un ou plusieurs épaississants
jusqu'à 80% du solvant
0 à 20% d'autres additifs.

12. Système de conditionnement en récipient suivant la revendication 11, dans lequel la composition comprend :
15 à 80% d'un produit dangereux ou produit agrochimique,
2 à 15% d'un surfactant
1 à 10% d'un ou plusieurs épaississants,
3 à 75% du solvant
0,1 à 10% d'autres additifs.

13. Système de conditionnement en récipient suivant l'une quelconque des revendications 1 à 12, qui comprend une composition qui contient 1 à 25 % de dispersant.

14. Système de conditionnement de récipient suivant la revendication 13, qui comprend une composition qui contient 2 à 8 % d'un dispersant.

15. Système de conditionnement en récipient suivant l'une quelconque des revendications précédentes, qui comprend une composition contenant un surfacant hydrosoluble ou dispersable dans l'eau subissant avec succès l'essai suivant : le solvant (50 g) et l'adjuvant tensio-actif (5 g) sont ajoutés à une quantité d'eau, à 50°C, qui est suffisante pour porter le volume du mélange à 100 ml ; le mélange est agité de manière à obtenir une suspension ou suspo-émulsion homogène et cette suspension ou suspo-émulsion est laissée au repos pendant 30 minutes à 50°C dans une éprouvette graduée, la quantité de phase huileuse qui peut être séparée ou la quantité de matière solide qui s'est déposée (et qui a ainsi formé une phase liquide ou solide distincte) doit être alors inférieure à 20 ml.

16. Système de conditionnement en récipient suivant l'une quelconque des revendications 1 à 15, qui comprend une composition contenant moins de 3 % en poids d' eau.

17. Système de conditionnement en récipient suivant la revendication 16, qui comprend une composition contenant moins de 1 % en poids d'eau.

18. Système de conditionnement en récipient suivant l'une quelconque des revendications 1 à 17, qui comprend une composition ayant une viscosité de 50 à 30 000 centipoises.

19. Système de conditionnement en récipient suivant la revendication 18, qui comprend une composition ayant une viscosité comprise dans l'intervalle de 100 à 12 000 centipoises.

20. Système de conditionnement en récipient suivant la revendication 19, qui comprend une composition ayant une viscosité comprise dans l'intervalle de 800 à 10 000 centipoises.

21. Système de conditionnement en récipient suivant l'une quelconque des revendications 1 à 20, qui comprend une composition ayant une spontanéité inférieure à 25.

22. Système de conditionnement en récipient suivant l'une quelconque des revendications 1 à 21, dans lequel le sac hydrosoluble comprend un film de formation d'enveloppe, comprenant un polymère choisi entre un polymère d'oxyde d'éthylène, un polyéthylèneglycol, l'amidon, et un amidon modifié, une alkylcellulose et une hydroxyalkylcellulose, l'hydroxyéthylcellulose, l'hydroxypropylcellulose, la carboxyméthylcellulose ; des polymères d' éther vinylique ; un polymère d'éther de méthyle et de vinyle ; le poly(2,4-diméthyl-6-triazolyléthylène) ; le poly(acide vinylsulfonique) ; des polyanhydrides ; des résines urée-formaldéhyde de bas poids moléculaire, des résines mélamine-formaldéhyde de bas poids moléculaire, le poly(méthacrylate de 2-hydroxyéthyle) ; un polymère d'acide acrylique et ses homologues ; et un polymère d'alcool vinylique.

23. Système de conditionnement en récipient suivant l'une quelconque des revendications 1 à 22, dans lequel le sac hydrosoluble comprend un film de formation d'enveloppe qui comprend un polymère d'oxyde d'éthylène ou de la méthylcellulose ou bien un polymère d'alcool vinylique.

24. Système de conditionnement en récipient suivant la revendication 23, dans lequel le film de formation d'enveloppe constituant le sac est un film de polymère d'acétate de vinyle ayant subi une alcoolyse ou hydrolyse de 40 à 100 %.

25. Système de conditionnement en récipient suivant la revendication 24, dans lequel le film de formation d'enveloppe constituant le sac est un film de polymère d'acétate de vinyle ayant subi une alcoolyse ou hydrolyse de 80 à 99 %.
